# EUROPEAN PATENT APPLICATION

(11) **EP 2 123 494 A1**
(43) Date of publication of application: **25.11.2009**
(21) Application number: 08703244.7
(22) Date of filing: 16.01.2008
(51) Int. Cl.: B60H 1/00, F24F 13/02

(54) **AIR CONDITIONING UNIT AND IN-VEHICLE AIR CONDITIONING APPARATUS**

(30) Priority: 23.02.2007 JP 2007044025
(71) Applicant: Mitsubishi Heavy Industries, Ltd., Tokyo 108-8215 (JP)
(72) Inventor: EGUCHI, Tsuyoshi, Takasago-shi Hyogo 676-8686 (JP); SUZUKI, Atsushi, Kiyosu-shi Aichi 452-8561 (JP); TOMINAGA, Tetsuo, Takasago-shi Hyogo 676-8686 (JP); NAKAO, Mitsuhiro, Takasago-shi Hyogo 676-8686 (JP); IZUMI, Hajime, Takasago-shi Hyogo 676-8686 (JP)
(74) Representative: Intes, Didier Gérard André
(86) International application number: PCT/JP2008/050383
(87) International publication number: WO 2008/117548

(57) **Abstract**

An air conditioning unit capable of suppressing a low frequency noise and a vehicle air conditioning apparatus are provided. The air conditioning unit includes a fan (9) for supplying air, a heat exchanger (7) for performing heat exchange between the air supplied from the fan (9), a first flow passage (13) for guiding the air supplied from the fan (9) in a direction along a surface of the heat exchanger (7), and a second flow passage (15) for turning the flow direction of the air passed through the first flow passage (13) in a direction intersecting the surface of the heat exchanger (7), wherein a projecting portion (25, 27) is disposed to the confronting surface (19) of the second flow passage (15) confronting the heat exchanger (7) so as to project toward the heat exchanger (7) as well as to extend in a direction along the air flow in the first flow passage (13).

## Description

### Technical Field

The present invention relates to an air conditioning unit and a vehicle air conditioning apparatus.

### Background Art

Ordinarily, it is known that various types of noises are generated in an air conditioning unit such as an HVAC (Heating, Ventilation, and Air-Conditioning) unit and the like used in a vehicle air conditioning unit due to disturbance of an air flow flowing in the inside of the air conditioning unit.

For example, there are known a noise generated by separation of an airflow in a portion having a high flow velocity on a wall surface in the inside of an air conditioning unit and a noise generated by disturbance of an airflow caused by a complex structure of the portion, through which air passes, of the inside of an air conditioning unit. To suppress generation of these noises, there is proposed a technology relating to the structure of a wall surface and the like for reducing separation of an airflow by suppressing generation of a turbulent flow (refer to, for example, Patent Document 1).

On the other hand, there is also known a noise generated because an airflow is disturbed in a flow passage for guiding air to an evaporator in the inside of an air conditioning unit. To suppress generation of the noise, there is also proposed a technology relating to a structure in the above flow passage for making the distribution of an air flow flowing into an evaporator uniform (refer to, for example, Patent Document 2).
Patent Document 1: Japanese Unexamined Patent Application Publication No. 2006-151068
Patent Document 2: Japanese Unexamined Patent Application Publication No 2003-211936

### Disclosure of Invention

It is known that it is generated a noise (hereinafter, referred to as a low frequency noise) having a frequency component lower than the noise (hereinafter, called 1NZ noise) having a blade passing frequency determined based on the multiplication of the number of revolutions (N) of a blower fan and the number of blades (Z) thereof, in addition to the noises described above.

It is considered that the low frequency noise is generated by the backflow of air, which is generated in a region adjacent to a tongue portion and flown into the inside of a blower fan, disturbance of an airflow in a diffuser and a flow passage located in front of the evaporator for guiding the air supplied from the blower fan to an evaporator, and the like, and the low frequency noise has a problem in that it is difficult for the technologies disclosed in Patent Documents 1 and 2 described above to suppress the noise.

The frequency of the low frequency noise is not affected by the number of revolutions (N) of a blower fan.

In particular, although the technology disclosed in Patent Document 2 can somewhat reduce the low frequency noise, it is disadvantageous in that air flowing into an evaporator has a large pressure loss.

An object of the present invention, which was made to solve the above problems, is to provide an air conditioning unit capable of suppressing a low frequency noise and a vehicle air conditioning apparatus.

To achieve the above object, the present invention provide the following means.

A first aspect of the present invention provides an air conditioning unit which include a fan for supplying air, a heat exchanger for performing heat exchange between the air supplied to the fan, a first flow passage for guiding the air supplied from the fan in a direction along a surface of the heat exchanger, and a second flow passage for turning the flow direction of the air passed through the first flow passage in a direction intersecting the surface of the heat exchanger, wherein a projecting portion is disposed to the confronting surface of the second flow passage confronting the heat exchanger so as to project toward the heat exchanger as well as to extend in a direction along the air flow in the first flow passage.

According to the first aspect of the present invention, since a part of the air flowing in the second flow passage is guided by the projecting portion, that is, since the flow direction of the air is restricted by the projecting portion, the unstable airflow flowing in the second flow passage can be reduced.

Since other part of the air flowing in the second flow passage is caused to collide against the projecting portion, the flow direction of the air can be changed to a direction from the confronting surface toward the heat exchanger.

In the first aspect of the invention, it is preferable that a plurality of the projecting portions be disposed and that the flow passage area between the projecting portions be approximately unchanged from an upstream side toward a downstream side in the second flow passage.

With this arrangement, since the flow passage area is approximately unchanged as well as the flow is unlike to be separated when it passes the projections as compared with the case that a flow passage area between projecting portions is changed abruptly, an increase of pressure loss of the air flowing between the projecting portions can be suppressed.

In the first aspect of the invention, it is preferable that a plurality of the projecting portions be disposed and that the flow passage area between the projecting portions is reduced from an upstream side toward a downstream side in the second flow passage.

With this arrangement, the air flowing between the projecting portions is forcibly discharged from between the projecting portions as it flows from an upstream side toward a downstream side, and the flow direction of the air is changed to the direction from the confronting surface toward the heat exchanger. Accordingly, the amount of air whose direction is changed to the direction from the confronting surface toward the heat exchanger can be increased as compared with the case that a flow passage area between projecting portions is approximately unchanged.

In the first aspect of the invention, it is preferable that a forcibly-air-supplying surface be formed to the downstream side region in the second flow passage between the projecting portions so as to slant in a direction separating from the confronting surface toward the downstream side.

With this arrangement, since the air flowing between the confronting surfaces collides against the forcibly-air-supplying surface, and the flow direction of the air is changed to a direction separating from the confronting surface. Accordingly, the amount of the air whose direction is changed to the direction from the confronting surface toward the heat exchanger can be increased as compared with the case that the forcibly-air-supplying surface is not provided.

In the first aspect of the invention, it is preferable that the projecting portions be formed to at least any of the wall surfaces constituting the first flow passage.

With this arrangement, since a part of the air flowing the first flow passage flows between the projecting portions and the flow direction thereof is restricted by the projecting portions, the unstable air flow in the first flow passage can be reduced.

A second aspect of the present invention provides a vehicle air conditioning apparatus provided with the air conditioning unit of the present invention.

According to the second aspect of the present invention, since the air conditioning unit of the present invention is provided, a low frequency noise can be suppressed.

According to the air conditioning unit of the first aspect and the vehicle air conditioning apparatus of the second aspect of the present invention, there can be achieved an advantage in that the unstable air flowing in the second flow passage can be reduced and the low frequency noise can be suppressed by causing a part of the air flowing in the flow passage to flow between the projecting portions and restricting the flow direction of the air by the projecting portions.

### Brief Description of Drawings

[FIG. 1] FIG. 1 is a sectional view explaining a schematic arrangement of an HVAC unit in a vehicle air conditioning apparatus according to a first embodiment of the present invention.
[FIG. 2] FIG. 2 is a partially enlarged view explaining an arrangement of a flow passage in front of an evaporator.
[FIG. 3] FIG. 3 is a partially sectional view explaining the section shapes of first projecting portions and second projecting portions of FIG. 2.
[FIG. 4] FIG. 4 is a partially perspective view explaining an arrangement of the first projecting portion of FIG. 1.
[FIG. 5] FIG. 5 is a partially perspective view explaining the second projecting portion of FIG. 1.
[FIG. 6] FIG. 6 is a sectional view explaining a layout of the first projecting portion and the second projecting portion of FIG. 2.
[FIG. 7] FIG. 7 is a partially enlarged view explaining an arrangement of a flow passage in front of an evaporator in an HVAC unit of a vehicle air conditioning apparatus of a second embodiment of the present invention.
[FIG. 8] FIG. 8 is a perspective view explaining an arrangement of a first projecting portion of FIG. 7.

### Explanation of Reference Signs:

- 1:: vehicle air conditioning apparatus
- 3:: HVAC unit (air conditioning unit)
- 7:: evaporator (heat exchanger)
- 9:: blower fan (fan)
- 13:: diffuser (first flow passage)
- 15:: flow passage in front of evaporator (second flow passage)
- 19:: confronting surface
- 25:: first projecting portion (projecting portion)
- 27:: second projecting portion (projecting portion)
- 35:: forcibly-air-supplying surface
- 41:: third projecting portion (projecting portion)

### Best Mode for Carrying Out the Invention

### First Embodiment

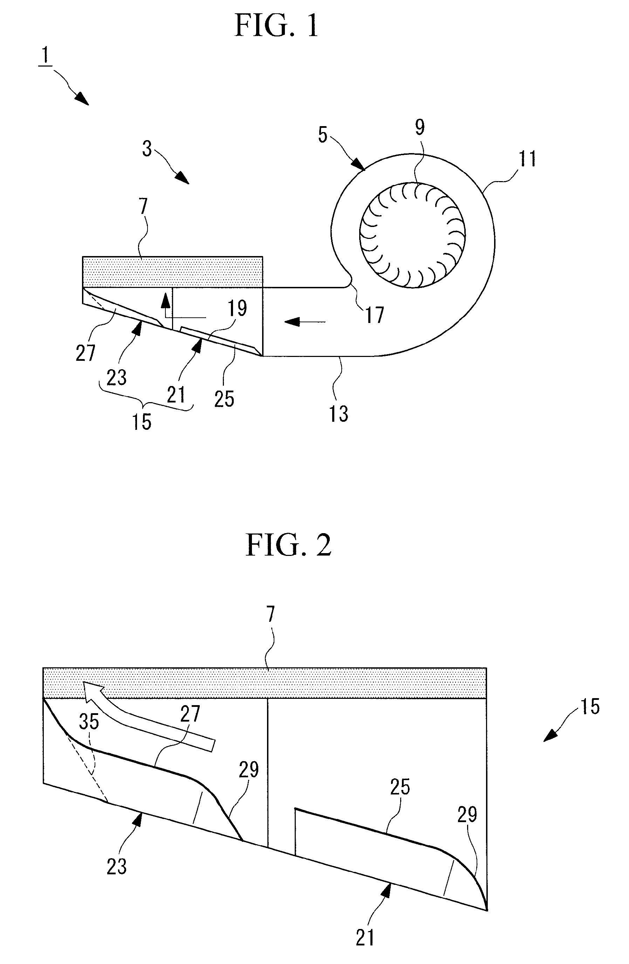

A vehicle air conditioning apparatus according to a first embodiment of the present invention will be explained below referring to FIG. 1 to FIG. 5.

FIG. 1 is a sectional view explaining a schematic arrangement of an HVAC unit in the vehicle air conditioning apparatus according to the embodiment.

As shown in FIG. 1, the HVAC (Heating, Ventilation, and Air-Conditioning) unit (air conditioning unit) 3 of the vehicle air conditioning apparatus 1 includes a casing 5, an evaporator (heat exchanger) 7, and a blower fan (fan) 9 disposed thereto.

The vehicle air conditioning apparatus 1 has a function for providing a comfortable vehicle compartment environment by performing air conditioning and dehumidification by supplying conditioned air into a vehicle compartment. The vehicle air conditioning apparatus 1 has a closed refrigeration cycle composed of a compressor (not shown) operated making use of a part of the output from a vehicle internal combustion engine, a condenser (not shown) for condensing a gas refrigerant by subjecting it to heat exchange with outside air, and an expansion valve (not shown) for reducing the pressure of a liquid refrigerant, and the evaporator 7 for evaporating the liquid refrigerant by subjecting it to heat exchange with introduced air connected with each other through a refrigerant piping. The evaporator 7 described above has the function of robbing heat of evaporation from introduced air, is disposed in the HVAC unit 3 as a cooling means together with a heater core (not shown) acting as a heat source for ordinary heating, and cools and dehumidifies the introduced air.

The casing 5 accommodates the evaporator 7 and the blower fan 9 in the inside thereof and is composed of a fan casing 11 for accommodating the blower fan 9, a diffuser (first flow passage) 13 for guiding the air supplied from the blower fan 9, and a flow passage 15 (second flow passage) in front of the evaporator for guiding air to the evaporator 7.

The blower fan 9 is a fan for sucking air from the outside of the HVAC unit 3 and supplying it toward the evaporator 7, and a sirocco fan and the like, for example, are used.

The blower fan 9 is rotatably disposed in the inside of the fan casing 11 so that the air supplied radially externally from the blower fan 9 flows along the cylindrical wall surface of the fan casing. The diffuser 13, which extends along the tangential line direction of the cylindrical wall surface, is connected to the fan casing 11. A tongue portion 17 is projectingly formed to the connecting portion where the diffuser 13 is connected to the fan casing 11, and the tongue portion 17 projects to a flow passage side formed by the fan casing 11 and the diffuser 13.

The diffuser 13 is a flow passage for guiding the air supplied from the blower fan 9 to the air duct 15 in front of the evaporator and extends in a direction along the surface of the evaporator 7. In the following explanation, the embodiment is explained in reference to a case in which it is applied to the diffuser 13 having a flow passage formed in an approximately rectangular sectional shape.

The flow passage 15 in front of the evaporator, which guides the air flown from the diffuser 13 to the evaporator 7, changes the direction of the air flowing along the surface of the evaporator 7 in the diffuser 13 to a direction intersecting the surface of the evaporator 7 (for example, to a vertical direction).

The evaporator 7 is disposed to the flow passage 15 in front of the evaporator adjacent to the surface thereof to which the diffuser 13 is connected so that the center line of the flow passage of the diffuser 13 is approximately in parallel with the surface of the evaporator 7. The confronting surface 19, which confronts the evaporator 7, of the flow passage 15 in front of the evaporator is slantingly formed so that it becomes nearer to the evaporator 7 in a direction where it is more separated from the connecting surface of the diffuser 13.

The flow passage 15 in front of the evaporator is composed by combining a first divided member 21 on an upstream side and a second divided member 23 on a downstream side.

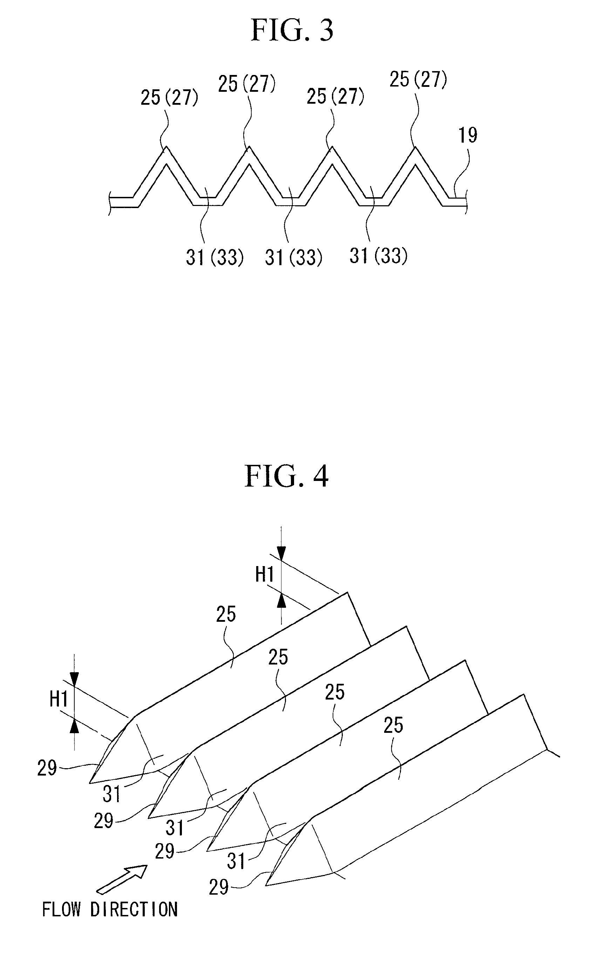

FIG. 2 is a partially enlarged view explaining an arrangement of the flow passage in front of the evaporator of FIG. 1. FIG. 3 is a partially sectional view explaining the sectional shapes of first projecting portions and second projecting portions of FIG. 2.

As shown in FIG. 1 and FIG. 2, the first projecting portions (projecting portions) 25 and the second projecting portions (projecting portions) 27 are disposed to the confronting surface 19 of the first divided member 21 and the second divided member 23 so as to project toward the evaporator 7 side as well as to extend in an air flow direction (an approximately left to right direction in FIG. 1), respectively.

As shown in FIG. 3, the first projecting portions 25 and the second projecting portions 27 are rib-shaped components formed by bending the confronting surface 19 in an approximately triangular shape so that the cross section thereof becomes sharp toward the evaporator 7 (an upper portion of FIG. 3).

Note that the first projecting portions 25 and the second projecting portions 27 may have approximately triangular sharp sections or may have sections in which at least the apexes thereof on the evaporator 7 side are formed of a curved surface, and the shapes of them are not particularly limited.

Further, the first projecting portions 25 and the second projecting portions 27 may be formed by being bent as described above or the first projecting portions 25 and the second projecting portions 27 formed of a member different from the confronting surface 19 may be disposed, and the arrangement of them is not particularly limited.

Further, the height (H) of the first projecting portions 25 and the second projecting portions 27 is not limited to the case where they are uniform in the direction where the projecting portions are disposed (the up/down direction of the HVAC unit 3).

FIG. 4 is a partially perspective view explaining an arrangement of the first projecting portion of FIG. 1.

A straightening portion 29 is disposed to the end of the first projecting portion 25 on the side thereof into which air flows in order to suppress an increase of loss due to collision of an airflow. The straightening portion 29 is composed of a slant surface connecting the confronting surface 19 to a side surface of the first projecting portion 25.

The height H1 of the first projecting portion 25 from the confronting surface 19 is set to the same value as that of the first projecting portion 25 from the end on the upstream side of an air flow to the end on the downstream side thereof. Accordingly, the sectional area of a first restricting flow passage 31, which is a space between the first projecting portions 25, is set to an approximately predetermined value from the upstream side of the airflow toward the downstream side thereof.

As shown in FIG. 2, the end of the first projecting portion 25 on the upstream side of the airflow is disposed in the vicinity of the upstream side end of the first divided member 21, and the end thereof on the downstream side is disposed spaced apart from the downstream side end of the first divided member 21.

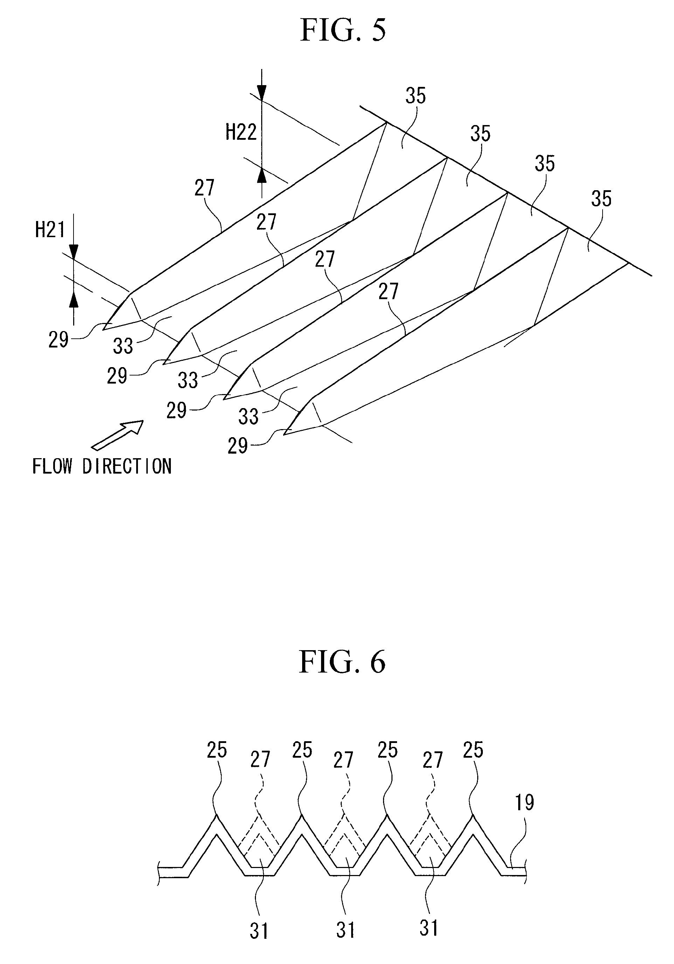

FIG. 5 is a partially perspective view explaining an arrangement of the second projecting portion of FIG. 1.

As shown in FIG. 5, a straightening portion 29 is disposed to the end of the second projecting portion 27 on the side thereof into which air flows to suppress an increase of pressure loss due to collision and separation.

The height H21 of each second projecting portion 27 from the confronting surface 19 at the upstream side end of the air flow is set lower than the height H22 thereof at the downstream side end of the air flow. Accordingly, the sectional area of a second restricting flow passage 33, which is a space between the second projecting portions 27, is narrowed from the upstream side to the downstream side of the air flow.

A forcibly-air-supplying surface 35, which slants from the confronting surface 19 downward toward the evaporator 7 side (an upper portion in FIG. 4), is disposed to the downstream side end of the air flow in the second restricting flow passage 33.

As shown in FIG. 2, the end of the second projecting portions 27 on the upstream side of the airflow is disposed downstream of the upstream side end of the second divided member 23 up to the downstream side end of the second divided member 23.

Note that the connection of the first projecting portion 25 and the straightening portion 29 and the connection of the second projecting portion 27 and the straightening portion 29 may be arranged as a ridge line formed by connecting a plane and a plane or may be arranged as a curved surface smoothly connected from the straightening portion 29 to the first projecting portions 25 or to the second projecting portion 27 and are not particularly limited.

Next, an airflow in the inside of the HVAC unit 3 of the vehicle air conditioning apparatus 1 will be explained.

As shown in FIG. 1, when the blower fan 9 is driven in rotation, air is sucked from the outside of the HVAC unit 3 and supplied radially externally of the blower fan 9. The air supplied by the blower fan 9 flows clockwise along the wall surface of the fan casing 11 and flows into the diffuser 13.

At that time, a part of the airflow collides against the tongue portion 17 and forms a high pressure region in the vicinity of the tongue portion 17.

The air flown into the diffuser 13 flows in a direction along the surface of the evaporator 7 and flows into the first divided member 21 of the flow passage 15 in front of the evaporator.

As shown in FIG. 2 and FIG. 4, a part of the air flown into the first divided member 21 flows into the first restricting flow passage 31 and flows toward the second divided member 23 in the state that it is restricted by the first projecting portions 25. On the other hand, another part of the flown air flows along the straightening portion 29 of the first projecting portions 25, thereby the flow direction of the air is changed to a direction toward the evaporator 7. The remaining flown air is separated to the air which flows in the inside of the first divided member 21 toward the second divided member 23 and the air which flows into the evaporator 7.

As described above, since the straightening portion 29 is formed to the slant surface, the separation of the airflow, which is caused when it flows into the straightening portion 29 and collides thereagainst, can be suppressed.

As shown in FIG. 2 to FIG. 5, the air flown from the first divided member 21 into the second divided member 23 flows into the second restricting flow passage 33 and flows toward the downstream side in the state it is restricted by the second projecting portions 27. Since the passage area of the second restricting flow passage 33 is narrowed toward the downstream side, the air, which flows in the second restricting flow passage 33, is forcibly discharged from the second restricting flow passage 33 as it flows downstream, thereby the direction of the air is changed to the direction toward the evaporator 7. Further, the air, which flows up to the downstream side end of the second restricting flow passage 33, collides against the forcibly-air-supplying surface 35 and flows along it, thereby the direction of the air is changed to the direction toward the evaporator 7.

In contrast, since the air flown into the second divided member 23 flows along the straightening portion 29 of the second projecting portion 27, the air flows into the evaporator 7 while the flow direction thereof is being changed to the direction toward the evaporator 7.

The second projecting portion 27 positively operates to direct the airflow toward the evaporator 7 to make the distribution of flow velocity of the air passing through the evaporator 7 as uniform as possible. This is also the same in the first projecting portion 25 of the first divided member 21.

According to the above arrangement, a part of the air flowing in the flow passage 15 in front of the evaporator flows in the first restricting flow passage 31 between the first projecting portions 25 or in the second restricting flow passage 33 between the second projecting portions 27, and the direction of the airflow is restricted by the first projecting portion 25 or the second projecting portion 27. Accordingly, since the unstable airflow flowing in the flow passage 15 in front of the evaporator can be reduced, the low frequency noise in the vehicle air conditioning apparatus 1 and the HVAC unit 3 can be suppressed.

Since the air flowing in the flow passage 15 in front of the evaporator is caused to flow along the first projecting portion 25 or the second projecting portion 27, the flow direction of the air can be changed to the direction from the confronting surface 19 toward the evaporator 7. Accordingly, the distribution of flow velocity of the air flowing into the evaporator 7 can be made uniform.

Since the passage area of the first restricting flow passage 31 is made approximately uniform from the upstream side to the downstream side of the air flow, it is possible to suppress an increase of pressure loss of the airflow flowing in the first restricting flow passage 31 as compared with the case that the passage area is reduced.

Since the passage area of the second restricting flow passage 33 is reduced from the upstream side to the downstream side of the airflow, an amount of the airflow whose flow direction is changed to the direction from the confronting surface 19 to the evaporator 7 can be increased as compared with the case that the passage area is made approximately uniform. Accordingly, the distribution of flow velocity of the air flowing into the evaporator 7 can be made uniform.

The air flown up to the downstream side end of the second restricting flow passage 33 collides against the forcibly-air-supplying surface 35, thereby the flow direction of the air is changed in a direction separating from the confronting surface 19. Accordingly, the direction of the air flow can be forcibly changed to the direction from the confronting surface 19 toward the evaporator 7 as compared with the case that the forcibly-air-supplying surface 35 is not provided, thereby it is possible to reduce the disturbance of flow.

In particular, it is possible to make the distribution of flow velocity of the air flowing into the evaporator 7 uniform by reducing the amount of air reaching up to the surface of the downstream side end in the second divided member 23 (the surface extending in the up/down direction at the left end of FIG. 2).

Since the first projecting portion 25 and the second projecting portion 27 are formed to the confronting surface 19, the rigidity of the confronting surface 19, that is, the duct rigidity of the flow passage 15 in front of the evaporator can be improved.

Since the downstream side end of the first projecting portions 25 is separated from the end of the first divided member 21 as well as the upstream side end of the second projecting portions 27 is separated from the end of the second divided member 23, the connecting surface (dividing surface) of the first divided member 21 and the second divided member 23 can be made to a plane, thereby the productivity of the HVAC unit 3 can be improved. Further, deterioration of a seal property between the first divided member 21 and the second divided member 23 can be prevented.

FIG. 6 is a sectional view explaining a layout arrangement of the first projecting portion and the second projecting portion of FIG. 2.

Note that, as shown in FIG. 6, the second projecting portions 27 may be disposed downstream of the first projecting portions 25 when viewed from the upstream side of the air flow or may be disposed downstream of the first restricting flow passage 31 as shown by dotted lines of FIG. 6, and the layout arrangement of the second projecting portions 27 is not particularly limited.

Note that, although the embodiment described above explains the example in which the first projecting portions 25 and the second projecting portions 27 are disposed to the flow passage 15 in front of the evaporator, the first projecting portions 25 may be disposed on the wall surface constituting the diffuser 13 along the airflow. The wall surface of the diffuser 13, on which the first projecting portions 25 are disposed, is not particularly limited and may be one wall surface or may be all the wall surfaces.

With this arrangement, since a part of the air flowing in the diffuser 13 flows in the first restricting flow passage 31 between the first projecting portions 25, the unstable airflow in the diffuser 13 can be suppressed. Accordingly, the low frequency noise in the vehicle air conditioning apparatus 1 and the HVAC unit 3 can be suppressed.

Note that when the flow passage 15 in front of the evaporator is formed integrally without being divided into the first divided member 21 and the second divided member 23 as described above, the first projecting portions 25 or the second projecting portions 27 may be formed to the entire confronting surface 19 and the layout thereof is not particularly limited.

### Second Embodiment

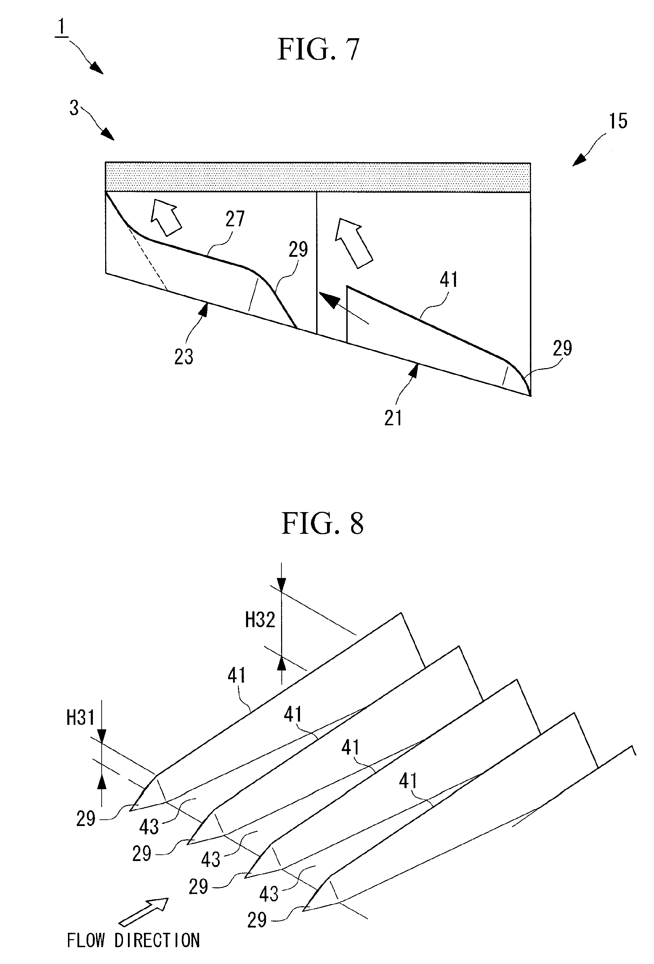

Next, a second embodiment of the present invention will be explained referring to FIG. 7 and FIG. 8.

The basic arrangement of a vehicle air conditioning apparatus of the embodiment is the same as the first embodiment except that first projecting portions are arranged differently. Thus, in the embodiment, only an arrangement of the first projecting portions is explained using FIG. 7 and FIG. 8 and the explanation of the other components and the like is omitted.

FIG. 7 is a partially enlarged view explaining an arrangement of a flow passage in front of the evaporator of an HVAC unit of the vehicle air conditioning apparatus of the embodiment. FIG. 8 is a perspective view explaining an arrangement of the first projecting portions of FIG. 7.

Note that the same components as those of the first embodiment are denoted by the same reference numerals and the explanation thereof is omitted.

A first divided member 21 and a second divided member 23 are disposed to the flow passage in front of an evaporator 15 of the HVAC unit 3 of the vehicle air conditioning apparatus 1, and third projecting portions (projecting portions) 41 are disposed to the confronting surface 19 of the first divided member 21 so as to project to the evaporator 7 side as well as to extend in the direction of an air flow (an approximately left to right direction in FIG. 7) as shown in FIG. 7 and FIG. 8.

The third projecting portions 41 are rib-shaped components formed by bending the confronting surface 19 in an approximately triangular shape so that a cross section becomes sharp toward the evaporator 7 likewise the first projecting portions 25 and the second projecting portions 27.

A straightening portion 29 is disposed to the end of each of the third projecting portions 41 on the side thereof into which air flows to suppress an increase of pressure loss due to collision and separation of an airflow. The straightening portion 29 is composed of a slant surface which connects the confronting surface 19 to a side surface of each of the third projecting portions 41.

The height H31 of each third projecting portion 41 from the confronting surface 19 at the upstream side end of the airflow is set lower than the height H32 thereof at the downstream side end of the airflow. Accordingly, the sectional area of a third restricting flow passage 43, which is a space between the third projecting portions 41, is narrowed from the upstream side to the downstream side of the airflow.

As shown in FIG. 7, the upstream side end in the airflow of each third projecting portion 41 is disposed in the vicinity of the upstream side end of the first divided member 21, and the downstream side end thereof is disposed so as to separate from the downstream side end of the first divided member 21.

Next, an airflow in the HVAC unit 3 of the vehicle air conditioning apparatus 1 arranged as described above will be explained.

Since an airflow until air is introduced into the inside of the HVAC unit 3 and guided to the flow passage 15 in front of the evaporator is the same as the first embodiment, explanation of this process is omitted.

As shown in FIG. 7 and FIG. 8, a part of the air flown into the first divided member 21 of the flow passage 15 in front of the evaporator flows into the third restricting flow passage 43 and flows downstream in the state that it is restricted by the third projecting portion 41. Since the flow passage area of the third restricting flow passage 43 is narrowed toward the downstream side, the air flowing in the third restricting flow passage 43 is forcibly discharged from the third restricting flow passage 43 as it flows downstream, thereby the direction thereof is changed to a direction toward the evaporator 7.

On the other hand, since another part of the flown air flows along the straightening portion 29 of the third projecting portion 41, the flow direction of the air is changed to the direction toward the evaporator 7. The remaining part of the flown air is divided into the air that flows in the inside of the first divided member 21 toward the second divided member 23 and the air that flows into the evaporator 7.

Since the subsequent airflow in the second divided member 23 is the same as that in the first embodiment, explanation of the airflow is omitted.

According to the above arrangement, the air, which flows in the third restricting flow passage 43 between the third projecting portions 41, is forcibly discharged therefrom as it flows from the upstream side to the downstream side, and the flow direction of the air is changed to the direction from the confronting surface 19 toward the evaporator 7. Accordingly, since the amount of air flow whose direction is changed to the direction toward the evaporator 7 can be increased as compared with the case that a flow passage area is approximately unchanged, the distribution of flow velocity of the air which flows into the evaporator 7 can be made more uniform than the first embodiment.

Further, the height (H) of the third projecting portion 41 is not limited to the case that it is uniform in the direction where the projection is disposed (the up/down direction of the HVAC unit 3).

Note that, although the embodiment described above explains the example in which the third projecting portions 41 and the second projecting portions 27 are disposed to the flow passage 15 in front of the evaporator, the third projecting portions 41 may be disposed on the wall surface constituting the diffuser 13 along the airflow. The wall surface of the diffuser 13, on which the third projecting portions 41 are disposed, is not particularly limited and may be one wall surface or may be all the wall surfaces.

With this arrangement, since a part of the air flowing in the diffuser 13 flows in the third restricting flow passage 43 between the third projecting portions 41, the unstable air flow in the diffuser 13 can be suppressed. Accordingly, the low frequency noise in the vehicle air conditioning apparatus 1 and the HVAC unit 3 can be suppressed.

Note that when the flow passage 15 in front of the evaporator is formed integrally without being divided into the first divided member 21 and the second divided member 23 as described above, the third projecting portions 43 may be formed to the entire confronting surface 19 and the layout thereof is not particularly limited

## Claims

1. An air conditioning unit, comprising:
a fan for supplying air;
a heat exchanger for performing heat exchange between the air supplied to the fan;
a first flow passage for guiding the air supplied from the fan in a direction along a surface of the heat exchanger; and
a second flow passage for turning the flow direction of the air passed through the first flow passage in a direction intersecting the surface of the heat exchanger,
wherein a projecting portion is disposed to the confronting surface of the second flow passage confronting the heat exchanger so as to project toward the heat exchanger as well as to extend in a direction along the air flow in the first flow passage.

2. An air conditioning unit according to claim 1, wherein:
a plurality of the projecting portions are disposed; and
the flow passage area between the projecting portions is approximately unchanged from an upstream side toward a downstream side in the second flow passage.

3. An air conditioning unit according to claim 1, wherein:
a plurality of the projecting portions are disposed; and
the flow passage area between the projecting portions is reduced from an upstream side toward a downstream side in the second flow passage.

4. An air conditioning unit according to any of claims 1 to 3, wherein a forcibly-air-supplying surface is formed to the downstream side region in the second flow passage between the projecting portions so as to slant in a direction separating from the confronting surface toward the downstream side.

5. An air conditioning unit according to any of claims 1 to 4, wherein the projecting portions are formed to at least any of the wall surfaces constituting the first flow passage.

6. A vehicle air conditioning apparatus provided with an air conditioning unit according to any of claims 1 to 5.
